# EUROPEAN PATENT APPLICATION

(11) **EP 3 979 374 A1**
(43) Date of publication of application: **06.04.2022**
(21) Application number: 20736391.2
(22) Date of filing: 25.05.2020
(51) Int. Cl.: H01M 8/0213, H01M 8/0228, H01M 8/023, H01M 8/0241, H01M 8/0247, H01M 8/0258, H01M 8/0271, H01M 8/04119, H01M 8/1007, H01M 8/1065, H01M 8/1016

(54) **HYDROGEN-POWERED FUEL CELL**

(30) Priority: 24.05.2019 ES 201930869 U
(71) Applicant: Centro de Investigaciones Energéticas Medioambientales y Tecnologicas (CIEMAT), 28040 Madrid (ES)
(72) Inventor: MARTÍNEZ CHAPARRO, Antonio, 28040 Madrid (ES); FERREIRA APARICIO, Paloma, 28040 Madrid (ES); FOLGADO MARTÍNEZ, Maria Antonia, 28040 Madrid (ES); CONDE LOPEZ, Julio José, 28040 Madrid (ES); DE RAFAEL VALDIVIA, David, 28040 Madrid (ES); MIGUEL VERDUGO, Francisco José, 28040 Madrid (ES)
(74) Representative: Pons
(86) International application number: PCT/ES2020/070341
(87) International publication number: WO 2020/240063

(57) **Abstract**

The present invention relates to a fuel cell that produces electricity from hydrogen, which it uses as fuel, and ambient air. The cell can power low-power portable applications, and comprises a cathode compartment (13) with a columnar plate (9), which passively facilitates air access and water discharge; an anode compartment (12) with a hydrophilic membrane (5) and an external container that accelerate the transport and water elimination processes in the cell, improving the performance thereof; and an electrolyte membrane (11) which is located between the anode compartment (12) and the cathode compartment (13).

## Description

### OBJECT OF THE INVENTION

The invention relates to a polymer-type fuel cell, which produces electricity from hydrogen and ambient air, which can power low-power portable applications, and which comprises a cathode compartment with a columnar plate, which passively facilitates air access and water discharge, an electrolyte membrane, and an anode compartment with a hydrophilic membrane and an external container that accelerate the transport and water elimination processes in the cell, improving the performance thereof.

### BACKGROUND OF THE INVENTION

Fuel cells are the devices that produce electricity from hydrogen with the highest performance. They are modular devices, easily scalable in different power ranges, silent and without mobile parts. They can work in stationary systems such as buildings or industries, in mobile applications, such as cars, boats, and airplanes, in small electronic devices, such as toys, drones, or unmanned vehicles, or in portable applications of different types, such as telephones, computers, tablets, and medical applications, such as in cochlear hearing aids, insulin pumps, pacemakers, and defibrillators.

Electric batteries are normally used to power these portable applications. The replacement of these electric batteries with fuel cells can lead to an improvement in autonomy and operational safety.

Fuel cells for portable applications have been proposed for the past two decades, primarily powered by liquid fuels, such as methanol, ethanol, and formic acid. In them, the liquid fuel allows a high density of stored energy. However, the oxidation of this fuel is not very efficient, even when a high catalyst load is used in the anode electrode, such that said cells suffer a considerable reduction in performance thereof. Added to this are other difficulties, such as the excessive permeation of the fuel through the electrolyte, the limited operational reliability, or even the toxicity of the fuel, which diminish the use thereof as an alternative to the use of traditional batteries.

Moreover, portable fuel cells that work with stored hydrogen do not suffer the same difficulties as liquid fuel cells, due to the fact that hydrogen is not a toxic product, and has a very easy anode reaction, which occurs with minimal loss of potential, leading to safe and clean combustion, which only produces water as waste.

One of the biggest difficulties posed by these cells when it comes to being implemented in a portable way is the storage of hydrogen with sufficient volumetric and mass density. To this end, new materials and means have recently been developed that can store hydrogen at low pressure and in a reversible way, based on physical and chemical interactions, such as metal hydrides, materials based on different forms of carbon (graphene, nanotubes), and other composite materials (nitrides, chalcogenides, oxides), which make the hydrogen cell very interesting for use thereof in these portable applications today.

Another drawback exhibited by hydrogen cells is the transport of air (or oxygen) and water. This topic constitutes another important field of research, as it is one of the aspects that most affects the performance and efficiency thereof.

In some alternatives, such as the one proposed in the document by K. Akiyama "An Air-Breathing Single Cell Micro PEMFC System with AB5-Type Metal Hydride and an Ultra-Low Voltage Input Boost Converter" 2008 Fuel Cell Seminar & Exposition, a purge valve is used, which expels to the outside the hydrogen and water generated in the hydrogen cell, which is powered by natural convection.

There is a proposal that consists of adding, to a fuel cell to which oxygen is supplied by means of natural air convection, a rigid and highly porous layer between the cathode and a gas diffusion layer, which reduces losses through contact and minimises transportation losses, as outlined in the document by B. Babcock, A. J. Tupper, D. Clark, T. Fabian, and R. O'Hayre. "Optimization of Passive Air Breathing Fuel Cell Cathodes. J. Fuel Cell Science and Technology*".*

In the document by T. Fabian, R. O'Hayre, S. Litster, F.B. Prinz and J.G. Santiago "Passive water management at the cathode of a planar air-breathing proton exchange membrane fuel cell" J. Power Sources 195 (2010), a hydrogen cell is proposed in which oxygen reaches the cathode electrode by means of natural air convection, and which comprises a water collecting layer, which once it has reached a storage limit, allows the rest of the water to exit to the outside through a wick that connects the inside and the outside of the cell.

In document ES 2466590, a fuel cell of the PEMFC (Proton-Exchange Membrane Fuel Cells) type is described, which has the particularity of not requiring auxiliary elements for the correct operation thereof, such as the use of automation for the discharge of water or of ventilation, using oxygen from the ambient air by means of natural convection ('air breathing') and hydrogen stored in a portable form.

### DESCRIPTION OF THE INVENTION

The object of the invention is a fuel cell which works with hydrogen in a completely passive way, preferably intended for portable applications. More specifically, the invention comprises a single cell having a preferably circular shape, the geometry of which improves the water-tightness of the closure and the operational homogeneity.

The fuel cell object of the invention comprises an electrolyte membrane, an anode compartment, wherein passive means of transport and water collection accelerate the transport and water elimination processes, and a cathode compartment wherein a columnar plate passively facilitates the entry of ambient air, the discharge of water produced in the cell and the optimal electrical contact between the elements comprised in the cathode compartment. Both the anode compartment and the cathode compartment have adequate hydrophobicity, different in each one of them, such that the exit of water is facilitated due to gradients of capillary pressure.

More specifically, the fuel cell comprises:
- The electrolyte membrane located between the anode compartment and the cathode compartment. Said electrolyte is a proton-conducting membrane with sufficient impermeability to gases.
- The anode compartment which exhibits a layer structure comprising:
   ∘ a slotted support plate, which is rigid, insulating and thin and comprises a gas inlet conduit, preferably hydrogen, and a water and gas outlet conduit,
   ∘ a first grid current collector, in contact with the side of the slotted support plate that is closer to the anode compartment, which allows the circulation of water, and which is assembled on a fixing frame such that the water-tightness of the anode compartment is secured,
   ∘ a first gas diffusion electrode, located after the first grid current collector, between the same and the electrolyte membrane, which facilitates the removal of water from the catalytic layer without the need to use automatic purging systems which entail extra consumption,
   ∘ first, preferably ring-shaped, gaskets with an inner opening equal to the area of the first gas diffusion electrode, located on both sides of the first grid current collector, which secure the water-tightness of the anode compartment,
   ∘ the aforementioned passive means of transport and water collection, comprising:
      ▪ a hydrophilic membrane, located after the slotted support plate, on the face opposite from the first current collector, which is impermeable to the passage of hydrogen, such that it allows the permeation of water from the anode compartment to the outside of the cell, without having a hydrogen leak,
      ▪ an external container, connected to the water and gas outlet conduit of the slotted support plate, wherein the water in steam phase generated by the cell condenses,
   ∘ second, preferably ring-shaped, watertight gaskets, placed on both sides of the hydrophilic membrane, with an inner opening equal to the area of the first gas diffusion electrode, and
   ∘ a slotted fixing plate, located after the hydrophilic membrane, on the face opposite from the support plate.
- The cathode compartment exhibits a layer structure comprising:
   ∘ a second gas diffusion electrode, in contact with the electrolyte membrane, on the face opposite from the first diffusion electrode,
   ∘ a second grid current collector, placed after the second gas diffusion electrode, on the face opposite from the electrolyte, which facilitates the elimination of water,
   ∘ the columnar plate, mentioned above, located after the second current collector, on the face opposite from the electrode, and comprising:
      ▪ a base plate,
      ▪ a distribution of columns wherein one end of the columns stems from the base plate and the opposite end is in contact with the second current collector.

In order to keep the aforementioned elements connected, through screws or studs can be used, preferably made of stainless steel, conveniently insulated to prevent the short circuit between the anode compartment and the cathode compartment, such that the structure can be disassembled. Another alternative is that the watertight gaskets that are placed between the different elements are fixed to the plates by means of adhesive or heat, such that the structure cannot be disassembled.

When it comes to using the cell, several of them can be attached in a multi-cell piling or stack, by means of the electrical connection in series or in parallel, depending on the current and voltage requirements. These connections are made by means of electrical contacts integrated in the compartments of the fuel cell. In the event of a series connection, the anode compartment of a cell is attached to the cathode compartment of the adjacent one, extracting the electricity from the compartments of the cells located on the ends. This association exhibits the advantage that it gives rise to a fuel cell with a flat configuration, as opposed to conventional fuel cells which exhibit a more three-dimensional configuration. Moreover, unlike the latter, each individual cell can be disassembled, repaired and/or changed, without affecting the other cells.

The cell can be powered with hydrogen in the anode compartment from a portable storage.

The slotted support plate of the anode compartment can be made of a highly rigid and water-resistant polymer (methacrylate (G=1.7 GPa), Bakelite (G=10 GPa), PEEK (G=3.7 GPa), PC (G=1.5 GPa), PTFE (G=0.3 GPa)).

Those elements that are made of materials liable to be attacked by the acidic environment of the anode compartment can comprise a protective coating on the face that is in contact with the anode compartment.

The first current collector and the second current collector may be a conductive metal grid, preferably welded with a mesh of 20x20 to 40x40 strands per inch and a strand size of 0.005 to 0.007 inches, so as to allow water to pass through it. These strands can be covered by a layer of a material selected between Gold, Carbon, or another that improves the electrical contact or protection against corrosion.

The first current collector can be assembled on a fixing frame that can be made of the same metal material as the collector or of another conductive material. Alternatively, it can be assembled on a plastic polymer structure arranged such that it allows the electrical connection of the grid of the first current collector to an external electrical circuit, maintaining the water-tightness.

In order to improve the water flow from the anode compartment to the hydrophilic membrane, the inner face of the fixing plate can be coated in a hydrophilic material, selected, for example, between titanium oxide or silicon oxide.

The first watertight gaskets and the second watertight gaskets can be made of a material selected between silicon, Teflon, polyimide, or another chemically stable material in the acidic environment of the cell, as long as it ensures water-tightness. The thickness of the watertight gaskets can be of 100-300 microns, approximately the same as that of the first electrode.

The first and the second gas diffusion electrodes can be made up of hydrophobised carbon fibres, coated in a microporous layer of carbon black and a platinum film supported on carbon, together with a perfluorosulfonic acid ionomer.

The column matrix comprising the columnar plate may be arranged in a square, hexagonal or similar network, with a space of 1-4 mm between columns, a column radius of 0.5-2 mm, and a column height of 1-1.5 cm. The columnar plate can be made of a rigid material selected between steel, aluminium, alumina, mullite or a rigid polymer and the columns can be coated in a hydrophilic material to facilitate water discharge.

The electrolyte membrane can be a proton conductive polymer, preferably Nafion, from 20 to 120 microns in thickness.

Advantageously, the present invention exhibits a hydrogen-powered fuel cell, preferably for portable applications, which by means of the redesign of the elements comprising the anode compartment and the cathode compartment and the incorporation of new elements such as the columnar plate, and the hydrophilic and hydrophobic components, accelerates the water, air and oxygen transport processes in the cell, securing an increase in the efficiency thereof, and a complete fuel cell system with reduced dimensions.

More specifically, the design of the cathode compartment allows the direct reaction with ambient air, without the need to use external elements, such as fans, which consume energy, and in addition, due to the columnar element, water and oxygen transport is improved in the cell.

The design of the anode compartment enables the cell to work without having to perform a periodical water purge, due to the external container for water condensation and the hydrophilic membrane, improving the performance of the cell.

Moreover, the hydrophobic and hydrophilic components incorporated by the anode compartment and the cathode compartment accelerate the transport and elimination processes of the water that the cell produces as waste, thereby increasing the performance of the cell.

### DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:
Figure 1 shows a general view of the hydrogen-powered fuel cell.
Figure 2 shows a view of the elements that make up the anode compartment of the hydrogen-powered fuel cell.
Figure 3 shows a view of the central elements of the hydrogen-powered fuel cell.
Figure 4 shows a view of the elements comprised by the cathode compartment of the hydrogen-powered fuel cell.

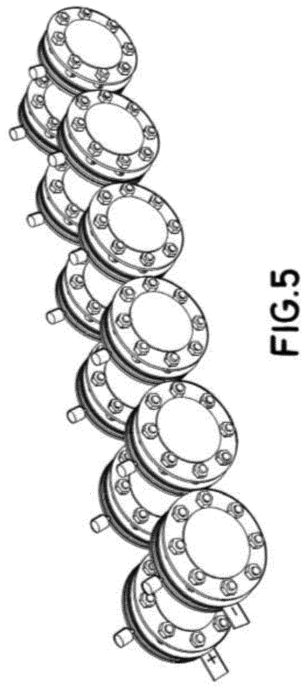

Figure 5 shows a stack configuration, having several cells connected to each other.

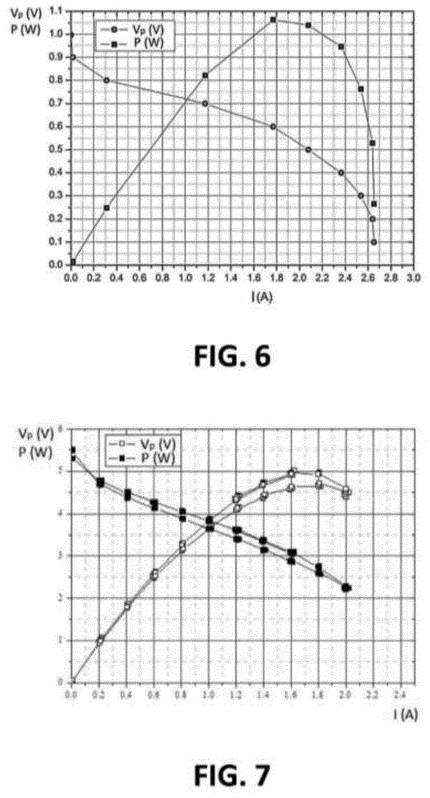

Figure 6 shows a graph representing the voltage and power supplied by the cell depending on intensity, for a single cell configuration of the fuel cell.
Figure 7 shows a graph representing the voltage and power supplied by the cell depending on intensity, for a stack configuration of six cells, of the fuel cell.

### PREFERRED EMBODIMENT OF THE INVENTION

A detailed explanation of a preferred exemplary embodiment of the object of the present invention is provided below with the aid of the aforementioned figures.

The fuel cell object of the invention consists of a fuel cell that works with hydrogen in a completely passive way, preferably for portable applications.

More specifically, the invention comprises an anode compartment (12) wherein the hydrogen reacts, a cathode compartment (13), wherein the oxygen from the air reacts, and an electrolyte membrane (11), which separates the flow of reagents.

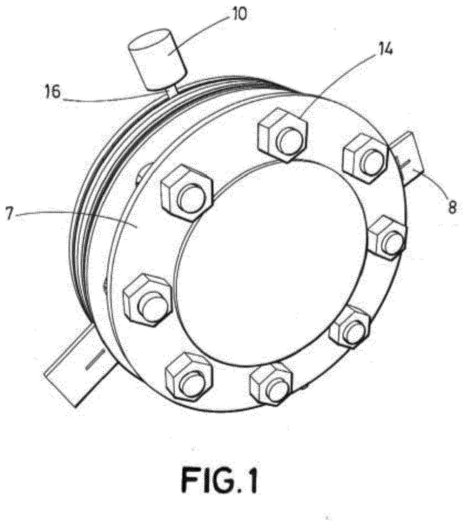

The geometry of the cell is circular, such that the water-tightness of the closure and the operative homogeneity are improved, as shown in Figure 1.

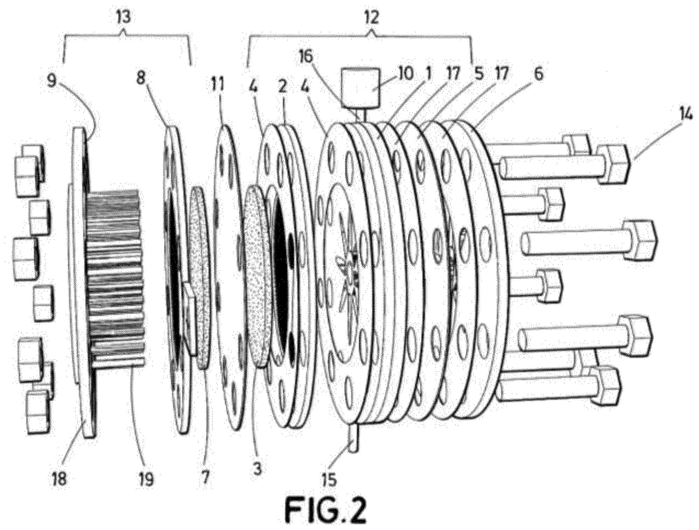

As shown in Figure 2, the cell comprises an electrolyte membrane (11), located between the anode compartment (12) and the cathode compartment (13).

The anode compartment (12), wherein a hydrophilic membrane (5) and an external container (10) for water condensation allow the operation thereof without the need for hydrogen purges. It further comprises a cathode compartment (13) wherein a columnar plate (9) passively facilitates the entry of ambient air, in addition to the discharge of the water produced.

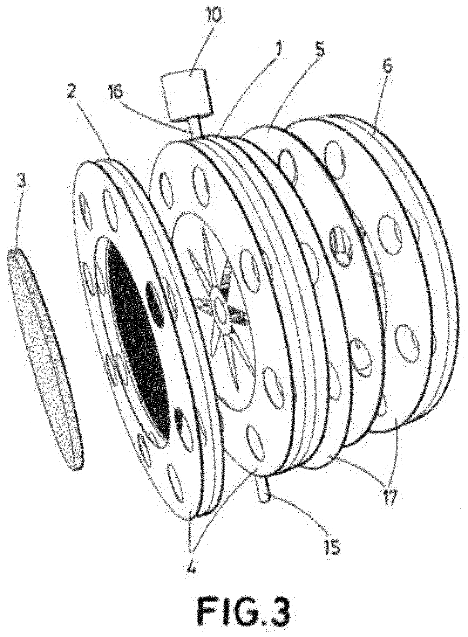

The anode compartment (12), as shown in Figure 3, exhibits a layer structure comprising a slotted support plate (1), which is rigid, insulating and thin, wherein there are located a hydrogen inlet conduit (15) and a water and gas outlet conduit (16).

In contact with the side of the slotted support plate (1) that is closer to the cathode compartment (13), there is a first grid current collector (2), which allows the passage of water and hydrogen therethrough, and which is assembled on a fixing frame such that it enables the water-tightness of the anode compartment (12).

After the first grid current collector (2), on the face opposite from the support plate (1), a first gas diffusion electrode (3) is placed, which facilitates the elimination of water.

On both sides of the first grid current collector (2), first ring-shaped watertight gaskets (4) are positioned, with an inner opening equal to the area of the first gas diffusion electrode (3), which secure the water-tightness of the anode compartment (12).

Passive means of water transport and collection are further located in the anode compartment (12), comprising, firstly, a hydrophilic membrane (5), placed after the external face of the slotted support plate (1), on the side opposite from the first current collector (2), the hydrophilic membrane (5) being impermeable to the passage of hydrogen, such that it allows the permeation of water from the anode compartment (12) to the outside of the cell, without having a hydrogen leak. Secondly, an external container (10) for water condensation, connected to the water and gas outlet conduit (16) of the slotted support plate (1).

Furthermore, it incorporates second, ring-shaped, watertight gaskets (17), placed on both sides of the hydrophilic membrane (5), and with an inner opening equal to the area of the first gas diffusion electrode (3), which secure the water-tightness of the anode compartment (12).

The anode compartment (12) further comprises a fixing plate (6), located after the hydrophilic membrane, on the face opposite from the support plate (1).

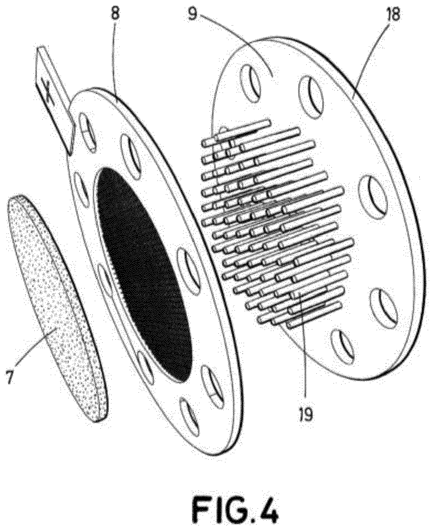

Moreover, the cathode compartment (13), as shown in Figure 4, further exhibits a layer structure comprising a second gas diffusion electrode (7), placed in contact with the electrolyte membrane (11), on the face opposite from the first electrode (3).

After the second gas diffusion electrode (7), on the face opposite from the electrolyte membrane (11), a second grid current collector (8) is placed, which allows the circulation of water and passage of air therethrough.

After the second grid current collector (8), on the face opposite from the second electrode (7), there is a columnar plate (9), comprising a base plate (18) and a distribution of columns (19), wherein the distribution of columns (19) locally presses the second current collector (8) against the second gas diffusion electrode (7), such that an optimal electrical contact, passive air access to the cathode and the discharge of water of the cell are secured.

This columnar structure allows the anode compartment (13) to react with the oxygen present in the ambient air, without the assistance of additional elements to force the airflow, such as a fan, securing maximum power utilisation.

In order to keep the different layers of the structure connected, fixing elements (14) are used, which can be through screws or studs, preferably made of stainless steel, conveniently insulated to prevent the short circuit between the anode compartment (12) and the cathode compartment (13), such that the structure can be disassembled.

For a non-removable assembly, the screws can be replaced by a glue or any other adhesive element that is able to maintain the layer structure both compact and watertight in the anode side. This "non-removable" assembly allows the weight of the cell to be reduced. However, for the fixing plate of the cathode columnar plate (9) it will be essential to keep at least two mechanical elements of adjustable fixing, such as two screws, with the aim of maintaining an adequate pressure on the cathode compartment.

## Claims

1. A hydrogen-powered fuel cell, comprising:
- a hydrophobic anode compartment (12),
- a cathode compartment (13), and
- an electrolyte membrane (11) which is located between the anode compartment (12) and the cathode compartment (13),
**characterised in that** the cathode compartment (13) comprises:
- a second gas diffusion electrode (7), placed after the electrolyte membrane (11), on the face opposite from the anode compartment (12),
- a second grid current collector (8), placed after the second gas diffusion electrode (7), on the face opposite from the electrolyte membrane (11),
- a columnar plate (9), located after the second grid current collector (8), on the face opposite from the second gas diffusion electrode (7), and comprising:
∘ a base plate (18)
∘ a distribution of columns (19), coated in a hydrophilic material, wherein one end of the columns (19) stems from the base plate (18) and the opposite end is in contact with the second current collector (8).

2. The hydrogen-powered fuel cell, according to claim 1, **characterised in that** the anode compartment (12) comprises:
- a slotted support plate (1),
- a gas inlet conduit (15) connected to the support plate (1),
- a water and gas outlet conduit (16) connected to the support plate (1),
- a first grid current collector (2), in contact with the face of the support plate (1) that is closer to the electrolyte membrane (11), and
- a first gas diffusion electrode (3), located between the first grid current collector (2) and the electrolyte membrane (11).

3. The hydrogen-powered fuel cell, according to claim 2, **characterised in that** the anode compartment (12) further comprises a hydrophilic membrane (5), located after the support plate (1), on the face opposite from the first current collector (2).

4. The hydrogen-powered fuel cell, according to claim 2, **characterised in that** the anode compartment (12) further comprises an external deposit (10), connected to the support plate (1) through the water and gas outlet conduit (16).

5. The hydrogen-powered fuel cell, according to claim 2, **characterised in that** the anode compartment (12) further comprises first watertight gaskets (4), located on both sides of the first grid current collector (2).

6. The hydrogen-powered fuel cell, according to claim 3, **characterised in that** the anode compartment (12) further comprises a fixing plate (6) located after the hydrophilic membrane, on the face opposite from the support plate (1).

7. The hydrogen-powered fuel cell, according to claim 3, **characterised in that** the anode compartment (12) further comprises second watertight gaskets (17), located on both sides of the hydrophilic membrane (5).

8. The hydrogen-powered fuel cell, according to claim 1, **characterised in that** it further comprises fixing elements (14) which maintain the anode compartment (12) connected to the cathode compartment (13) and to the electrolyte membrane (11).

9. The hydrogen-powered fuel cell, according to claims 1, 2, 3, 5, 6, 7 and 8, wherein the columnar plate (9), the second current collector (8), the electrolyte membrane (11), the first watertight gaskets (4), the second watertight gaskets (17), the support plate (1), the hydrophilic membrane (5) and the fixing plate (6) further comprise orifices through which the fixing elements (14), which are through screws, pass.

10. The hydrogen-powered fuel cell, according to claim 2, wherein the first grid current collector (2) is a conductive metal grid.

11. The hydrogen-powered fuel cell, according to claim 10, wherein the anode compartment (12) further comprises a structure positioned between the first gas diffusion electrode (3) and the support plate (1), on which the first grid current collector (2) is assembled, and which allows the electrical connection of the grid to an external electrical circuit.

12. The hydrogen-powered fuel cell, according to claim 1, wherein the distribution of columns (19) of the columnar plate (9) is a column matrix arranged in a square or hexagonal network, with a space of 1-4 mm between columns, a column radius of 0.5-2 mm, and a column height of 1-1.5 cm.

13. The hydrogen-powered fuel cell, according to claim 2, wherein the slotted support plate (1) is made of a highly rigid and water-resistant polymer.

14. The hydrogen-powered fuel cell, according to claim 10, wherein the grid is coated in a layer of a material selected between Gold and Carbon.

15. The hydrogen-powered fuel cell, according to claim 6, wherein the inner face of the fixing plate (6) is coated in a hydrophilic material.

16. The hydrogen-powered fuel cell, according to claim 1, wherein the second current collector (8) is a conductive metal grid.

17. The hydrogen-powered fuel cell, according to claims 5 and 7, wherein the first gaskets (4) and the second gaskets (17) are made of a material selected between silicon, Teflon and polyimide.

18. The hydrogen-powered fuel cell, according to claim 2, wherein the first gas diffusion electrode (3) is made up of hydrophobised carbon fibres, coated in a microporous layer of carbon black and a platinum film supported on carbon, together with a perfluorosulfonic acid ionomer.

19. The hydrogen-powered fuel cell, according to claim 1, wherein the columnar plate (9) is made of a rigid material selected between steel, aluminium, alumina, mullite and rigid polymer.

20. The hydrogen-powered fuel cell, according to claim 1, wherein the second current collector (8) is coated in a layer of a material selected between gold, carbon black and Nafion.

21. The hydrogen-powered fuel cell, according to claim 1, wherein the second gas diffusion electrode (7) is made up of hydrophobised carbon fibres, coated in a microporous layer of carbon black and a platinum film supported on carbon, together with a perfluorosulfonic acid ionomer.

22. The hydrogen-powered fuel cell, according to claim 1, wherein the electrolyte membrane (11) is a proton conductive polymer, from 20 to 120 microns in thickness.

23. The hydrogen-powered fuel cell, according to claim 1, wherein the anode compartment (12), the cathode compartment (13) and the electrolyte membrane (11) have a circular shape.
